# EUROPÄISCHE PATENTSCHRIFT

(11) **EP 4 157 695 B1**
(45) Veröffentlichungstag und Bekanntmachung des Hinweises auf die Patenterteilung: **06.08.2025**
(21) Anmeldenummer: 21715786.6
(22) Anmeldetag: 23.03.2021
(51) Int. Cl.: B60K 7/00, B62D 21/11, B62D 27/06

(54) **BEFESTIGUNGSANORDNUNG MIT EINER LAGERKONSOLE ZUR BEFESTIGUNG EINES ACHSTRÄGERS UND VERFAHREN ZUR MONTAGE EINES ACHSTRÄGERS**
FASTENING ASSEMBLY HAVING A BEARING BRACKET FOR FASTENING AN AXLE CARRIER, AND METHOD FOR MOUNTING AN AXLE CARRIER
SYSTÈME DE FIXATION COMPRENANT UNE CONSOLE DE SUPPORT POUR LA FIXATION D'UNE TRAVERSE D'ESSIEU ET PROCÉDÉ DE MONTAGE D'UNE TRAVERSE D'ESSIEU

(30) Priorität: 25.05.2020 DE 102020113946
(43) Veröffentlichungstag der Anmeldung: 05.04.2023
(73) Patentinhaber: Audi AG, 85045 Ingolstadt (DE); Dr. Ing. h.c. F. Porsche AG, 70435 Stuttgart (DE)
(72) Erfinder: SCHANTL, Gilbert, 80802 München (DE); ARTNER, Thomas, 86633 Neuburg a.d. Donau (DE); FRENSCH, Hans-Peter, 85055 Ingolstadt (DE); BUJAK, Marek, 91809 Wellheim (DE); WITTENSCHLÄGER, Thomas, 85049 Ingolstadt (DE); RUGIES, Stefan, 85057 Ingolstadt (DE); ACHLEITNER, Thomas, 6300 Wörgl (AT)
(74) Vertreter: Michalski Hüttermann & Partner Patentanwälte mbB
(86) Internationale Anmeldenummer: PCT/EP2021/057352
(87) Internationale Veröffentlichungsnummer: WO 2021/239289

(56) Entgegenhaltungen:
- DE-A1- 102012 012 327
- DE-A1- 102017 200 853
- DE-A1- 102018 205 799
- DE-B3- 102016 000 670

## Beschreibung

Die Erfindung betrifft ein Verfahren zur Montage und Befestigung eines Achsträgers.

Aggregate für einen Achsantrieb, wie bspw. ein Elektromotor, ein Differentialgetriebe oder Ähnliches, können teilweise oder vollständig auf dem Achsträger (Hilfsrahmen) einer Fahrzeugachse gelagert werden, der hierfür entsprechend ausgebildet ist.

Die DE 10 2017 200 853 A1 beschreibt einen Hilfsrahmen (1) für ein Kraftfahrzeug mit wenigstens zwei Lagerelementen (9) zur Anbindung eines Aggregats an dem Hilfsrahmen (1). Bei dem Aggregat kann es sich zum Beispiel um einen Elektromotor oder eine Batterie eines Hybrid- oder Elektrofahrzeugs handeln. Es kann jedoch auch vorgesehen sein, ein Differentialgetriebe oder ähnliches über die Lagerelemente (9) an dem Hilfsrahmen (1) zu lagern. Die Lagerelemente (9) befinden sich an Lagerkonsolen (6, 7), die mit einem Träger (4) des Hilfsrahmens (1) verschraubt oder verschweißt sind.

Die nächstliegende DE 10 2018 205 799 A1 beschreibt eine Lagerkonsole (10), die zur Abstützung eines Antriebsaggregats (36) einsetzbar ist. Die Lagerkonsole umfasst ein Aggregatelager (12) und ein Hilfsrahmenlager (14). Die Lagerkonsole (10) wird an einem Hilfsrahmen (20) des Kraftfahrzeugs angeordnet, derart, dass das Hilfsrahmenlager (14) in Verbindung mit einer Lageraufnahme (42) des Hilfsrahmens (20) steht und über eine Befestigungsschraube (18) mit der Karosserie verbunden wird. Die Befestigungsschraube (18) durchsetzt die Lagerkonsole (10). Mit anderen Worten: Die Lagerkonsole (10) wird zusammen mit dem Hilfsrahmen (20) in das Kraftfahrzeug eingebaut und über eine Befestigungsschraube (18) mit der Karosserie verbunden (vgl. Fig. 4 und Fig. 5).

Zum Stand der Technik wird ferner noch auf die DE 10 2012 012 327 A1 und DE 10 2016 000 670 B3 hingewiesen.

Mit der Erfindung soll eine Möglichkeit geschaffen werden, die bei der Serienfertigung bzw. in der Serienproduktion von Fahrzeugmodellen, welche insbesondere sowohl mit Einachs- als auch mit Zweiachsantrieb angeboten werden, die Produktionslogistik vereinfacht.

Dies gelingt mit dem erfindungsgemäßen Verfahren des Patentanspruchs 1. Zusätzliche Merkmale ergeben sich aus den abhängigen Patentansprüchen, der nachfolgenden Erfindungsbeschreibung und den Figuren.

Eine nachfolgend noch näher beschriebene Befestigungsanordnung (Achsbefestigungsanordnung) zur Befestigung eines Achsträgers (Hilfsrahmens) an einer Fahrzeugkarosserie, wobei der Achsträger an mehreren Anbindungs- bzw. Verbindungsstellen, wenigstens jedoch an einer Anbindungs- bzw. Verbindungsstelle, mit der Fahrzeugkarosserie verschraubt ist, ist dadurch gekennzeichnet, dass an wenigstens einer Anbindungsstelle eine Lagerkonsole zur Lagerung eines Aggregats für den Achsantrieb zwischen dem Achsträger und der Fahrzeugkarosserie angeordnet bzw. eingesetzt und mitverschraubt ist.

Bei dem zu lagernden Achsantriebsaggregat handelt es sich insbesondere um eine Antriebsmaschine, bspw. eine E-Maschine, oder um ein Getriebe, bspw. ein Differentialgetriebe.

Diese Befestigungsanordnung ermöglicht in relativ einfacher Weise die Befestigung einer als separates Bauteil ausgebildeten Lagerkonsole für ein Achsantriebsaggregat, wobei diese Lagerkonsole erfindungsgemäß nur dann verbaut bzw. eingebaut wird, wenn die betreffende Fahrzeugachse mit einem Achsantrieb ausgestattet werden soll. Falls kein Achsantrieb vorgesehen ist, wird ein Distanzelement bzw. Distanzstück eingebaut, wie nachfolgend noch näher erläutert. Dadurch wird die Produktionslogistik erheblich vereinfacht. In der Serienproduktion eines bestimmten Fahrzeugmodells können die zu verbauenden Achsträger für die betreffende Fahrzeugachse unabhängig von einem optional vorzusehenden Achsantrieb identisch ausgebildet werden, sodass eine Produktionssteuerung der großen und sperrigen Achsträger entfällt. Ferner werden der Materialeinsatz verringert und Kosten reduziert.

Die Befestigung an der Anbindungsstelle kann mittels zwei Schrauben oder dergleichen erfolgen, die jeweils einen Befestigungspunkt bilden, sodass an der Anbindungsstelle nicht nur Längs- und Querkräfte, sondern auch Dreh- bzw. Kippmomente abgestützt werden können.

Bevorzugt weist die Lagerkonsole einen ersten Befestigungsabschnitt auf, der zwischen dem Achsträger und der Fahrzeugkarosserie angeordnet und mitverschraubt ist, insbesondere mittels zwei Schrauben, sowie einen zweiten Befestigungsabschnitt, der zusätzlich mit der Fahrzeugkarosserie verschraubt ist, insbesondere mittels nur einer Schraube. Die Lagerkonsole ist insbesondere als Winkelstück ausgebildet, mit einem ersten Schenkel, an dem sich der erste Befestigungsabschnitt befindet, und mit einem zweiten Schenkel, an dem sich der zweite Befestigungsabschnitt befindet.

Die Lagerkonsole kann wenigstens ein Lagerelement, wie bspw. ein Gummi-Metall-Lager, zur Anbindung des Aggregats aufweisen, welches insbesondere am zweiten Schenkel angeordnet ist. Bevorzugt ist die Lagerkonsole, insbesondere am zweiten Schenkel, mit einer Aufnahme für das Lagerelement ausgebildet.

Die Lagerkonsole ist bevorzugt einstückig als Gussteil (d. h. als Metallgussteil), insbesondere als Leichtmetallgussteil, oder als FVK-Teil (d. h. als faserverstärktes Kunststoffteil) ausgebildet. Die Lagerkonsole kann auch mehrstückig, bspw. als Stahl- oder Aluminiumschweißteil, ausgebildet sein.

Das erfindungsgemäße Verfahren zur Montage und Befestigung eines Achsträgers an einer Fahrzeugkarosserie in der Serienproduktion von Kraftfahrzeugen, insbesondere in der Serienproduktion eines bestimmten Fahrzeugmodells, welches sowohl mit Einachs- als auch mit Zweiachsantrieb gefertigt wird, wobei der Achsträger an mehreren Anbindungsstellen, wenigstens jedoch an einer Anbindungsstelle, mit der Fahrzeugkarosserie verschraubt wird, umfasst die Schritte:
- Bereitstellen des Achsträgers aus einer Menge bzw. einem Bestand identischer Achsträger;
- gegebenenfalls Montieren von am Achsträger zu befestigenden Komponenten, wie bspw. Lenkungskomponenten, Fahrwerkskomponenten und dergleichen;
- Einsetzen des Achsträgers in die (ebenfalls bereitgestellte) Fahrzeugkarosserie und gegebenenfalls Ausrichten des Achsträgers relativ zur Fahrzeugkarosserie;
- Befestigen des Achsträgers an der Fahrzeugkarosserie, wobei an wenigstens einer Anbindungsstelle eine Lagerkonsole zur Lagerung eines Aggregats für den Achsantrieb zwischen dem Achsträger und der Fahrzeugkarosserie angeordnet bzw. eingesetzt und mitverschraubt wird (wie vorausgehend erläutert), falls für die betreffende Fahrzeugachse ein Achsantrieb vorgesehen ist, und an derselben Anbindungsstelle zwischen dem Achsträger und der Fahrzeugkarosserie ein Distanzstück angeordnet bzw. eingesetzt und mitverschraubt wird, falls für die betreffende Fahrzeugachse kein Achsantrieb vorgesehen ist.

Optional kann vorgesehen sein:
- Aufsetzen bzw. Vormontieren wenigstens eines Aggregats für den Achsantrieb auf den Achsträger (bevor der Achsträger in die Fahrzeugkarosserie eingesetzt wird), falls für die betreffende Fahrzeugachse ein Achsantrieb vorgesehen ist, wobei dieses Aggregat dann (nach dem Einsetzten des Achsträgers in die Fahrzeugkarosserie) beim Befestigen des Achsträgers an der Fahrzeugkarosserie auf wenigstens einer Lagerkonsole, die erfindungsgemäß zwischen dem Achsträger und der Fahrzeugkarosserie angeordnet bzw. eingesetzt und mitverschraubt wird (s. o.), abgestützt bzw. gelagert wird.

Das erfindungsgemäße Verfahren sieht also vor, dass bei der Montage bzw. Befestigung eines Achsträgers eine Fallunterscheidung getroffen wird und dass je nach dem an wenigstens einer Anbindungsstelle eine Lagerkonsole oder ein Distanzstück verbaut bzw. eingebaut wird, abhängig davon, ob für die betreffende Fahrzeugachse ein Achsantrieb vorgesehen ist oder nicht.

Das als separate Bauteil ausgebildete Distanzstück bzw. Distanzelement weist bezüglich der Anbindungsstelle gleiche Anschluss- bzw. Verbindungsmaße wie die Lagerkonsole auf. Bevorzugt handelt es sich bei dem Distanzstück um ein einstückiges Gussteil, insbesondere Leichtmetallgussteil, oder um ein FVK-Teil.

Die Lagerkonsole kann bereits am zu lagernden Aggregat, bei dem es sich insbesondere um eine E-Maschine oder um ein Differentialgetriebe handelt (s. o.), befestigt bzw. vormontiert sein, sodass die Lagerkonsole zusammen mit dem Aggregat eine Baueinheit bildet. Dies vereinfacht die Produktionslogistik und den Montageaufwand.

Die Erfindung wird nachfolgend anhand der Figuren näher erläutert. Die in den Figuren gezeigten und/oder nachfolgend erläuterten Merkmale können, auch unabhängig von bestimmten Merkmalskombinationen, allgemeine Merkmale der Erfindung sein und die Erfindung entsprechend weiterbilden.
- Fig. 1: zeigt eine mit einer Lagerkonsole ausgestattete Anbindungsstelle zur Befestigung eines Achsträgers an einer Fahrzeugkarosserie.
- Fig. 2: zeigt dieselbe Anbindungsstelle mit einem Distanzstück.

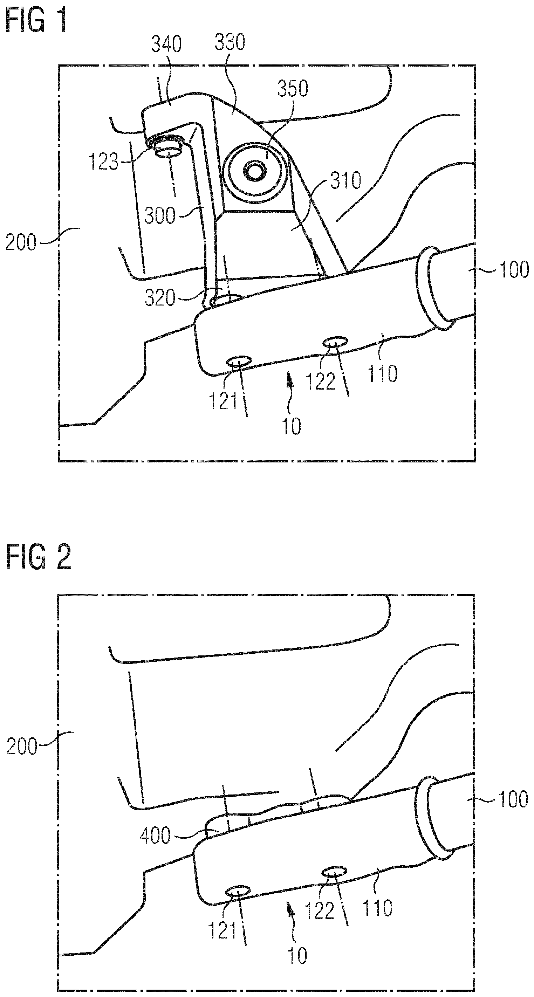

Das in Fig. 1 gezeigte Trägerende 110 eines Achsträgers (Hilfsrahmens) 100 ist an der Anbindungsstelle 10 mittels zwei Durchgangsschrauben 121, 122 mit einer Fahrzeugkarosserie 200 verschraubt. Zwischen dem Achsträger 100 bzw. dem Trägerende 110 und der Fahrzeugkarosserie 200 ist eine Lagerkonsole 300 zur Lagerung eines Aggregats für den Achsantrieb angeordnet und mitverschraubt. Die beiden zueinander beabstandeten Befestigungsschrauben 121, 122 durchragen einen ersten Befestigungsabschnitt 320 der Lagerkonsole 300, der dadurch quasi zwischen dem Trägerende 110 und der Fahrzeugkarosserie 200 eingeklemmt ist. Die Lagerkonsole 300 ist an einem zweiten Befestigungsabschnitt 340 zusätzlich mit der Fahrzeugkarosserie 200 verschraubt. Diese zusätzliche Verschraubung 123 dient bei der Montage auch als Hilfsverschraubung.

Die Lagerkonsole 300 ist als Winkelstück ausgebildet und weist einen ersten Schenkel 310 auf, an dem sich der erste Befestigungsabschnitt 320 befindet, und einen zweiten Schenkel 330, an dem sich der zweite Befestigungsabschnitt 340 befindet. Am zweiten Schenkel 330 befindet sich auch ein Lagerelement 350 zur Anbindung des zu lagernden Aggregats, bei dem es sich insbesondere um eine E-Maschine oder ein Differentialgetriebe handelt.

Die in Fig. 1 gezeigte Anbindungsvariante ist für eine Fahrzeugachse mit Achsantrieb vorgesehen. Fig. 2 zeigt dieselbe Anbindungsstelle 10, wobei anstatt der Lagerkonsole 300 ein Distanzelement 400 zwischen dem Achsträger 100 bzw. dem Trägerende 110 und der Fahrzeugkarosserie 200 angeordnet und mitverschraubt ist. Diese Anbindungsvariante ist für eine Fahrzeugachse ohne Achsantrieb vorgesehen.

## Patentansprüche

1. Verfahren zur Montage und Befestigung eines Achsträgers (100) an einer Fahrzeugkarosserie (200) in der Serienproduktion von Kraftfahrzeugen, wobei der Achsträger (100) an mehreren Anbindungsstellen mit der Fahrzeugkarosserie (200) verschraubt wird, umfassend die Schritte:
- Bereitstellen des Achsträgers (100) aus einer Menge identischer Achsträger;
- Einsetzen des Achsträgers (100) in die Fahrzeugkarosserie (200);
- Befestigen des Achsträgers (100) an der Fahrzeugkarosserie (200), wobei an wenigstens einer Anbindungsstelle (10) eine Lagerkonsole (300) zur Lagerung eines Aggregats für den Achsantrieb zwischen dem Achsträger (100) und der Fahrzeugkarosserie (200) angeordnet und mitverschraubt wird, falls ein Achsantrieb vorgesehen ist, und an derselben Anbindungsstelle (10) ein Distanzstück (400) zwischen dem Achsträger (100) und der Fahrzeugkarosserie (200) eingesetzt und mitverschraubt wird, falls kein Achsantrieb vorgesehen ist.

2. Verfahren nach Anspruch 1,
**wobei**
die Lagerkonsole (300) bereits am Aggregat befestigt ist und zusammen mit dem Aggregat eine Baueinheit bildet.

3. Verfahren nach Anspruch 1 oder 2,
**dadurch gekennzeichnet, dass**
die Befestigung der Lagerkonsole (300) oder des Distanzstücks (400) an der Anbindungsstelle (10) mittels zwei Schrauben (121, 122) erfolgt.

4. Verfahren nach einem der vorhergehenden Ansprüche,
**dadurch gekennzeichnet, dass**
die Lagerkonsole (300) einen ersten Befestigungsabschnitt (320) aufweist, der zwischen dem Achsträger (100) und der Fahrzeugkarosserie (200) angeordnet und mitverschraubt wird, sowie einen zweiten Befestigungsabschnitt (340), der zusätzlich mit der Fahrzeugkarosserie (200) verschraubt wird.

## Claims

1. Method for assembling and fastening an axle carrier (100) on/to a vehicle body (200) in the mass production of motor vehicles, wherein the axle carrier (100) is screwed to the vehicle body (200) at a plurality of connection points, comprising the steps:
- providing the axle carrier (100) from a quantity of identical axle carriers;
- inserting the axle carrier (100) into the vehicle body (200);
- fastening the axle carrier (100) to the vehicle body (200), wherein a bearing bracket (300) for mounting a unit for the final drive is disposed on and screwed to at least one connection point (10) between the axle carrier (100) and the vehicle body (200) if a final drive is provided, and a spacer (400) is inserted at and screwed to the same connection point (10) between the axle carrier (100) and the vehicle body (200) if no final drive is provided.

2. Method according to Claim 1,
wherein
the bearing bracket (300) is already fastened to the unit and conjointly with the unit forms a module.

3. Method according to Claim 1 or 2,
**characterized in that**
the fastening of the bearing bracket (300) or the spacer (400) to the connection point (10) is performed by means of two screws (121, 122).

4. Method according to one of the preceding claims, **characterized in that**
the bearing bracket (300) has a first fastening portion (320) which is disposed between the axle carrier (100) and the vehicle body (200) and screwed thereto, and a second fastening portion (340) which is additionally screwed to the vehicle body (200).

## Revendications

1. Procédé de montage et de fixation d'une traverse d'essieu (100) sur une carrosserie de véhicule (200) dans la production en série de véhicules à moteur, la traverse d'essieu (100) étant vissée à la carrosserie de véhicule (200) sur plusieurs points d'attache, comprenant les étapes :
- de fourniture de la traverse d'essieu (100) provenant d'une quantité de traverses d'essieu identiques ;
- d'insertion de la traverse d'essieu (100) dans la carrosserie de véhicule (200) ;
- de fixation de la traverse d'essieu (100) sur la carrosserie de véhicule (200), une console de support (300) destinée à supporter un groupe d'entraînement de la traverse d'essieu étant disposée et vissée entre la traverse d'essieu (100) et la carrosserie de véhicule (200) sur au moins un point d'attache (10) si une traverse d'essieu est prévue et une pièce d'écartement (400) étant insérée et vissée entre la traverse d'essieu (100) et la carrosserie de véhicule (200) sur le même point d'attache (10) si aucune traverse d'essieu n'est prévue.

2. Procédé selon la revendication 1,
dans lequel
la console de support (300) est déjà fixée sur le groupe d'entraînement et forme une unité modulaire conjointement avec le groupe d'entraînement.

3. Procédé selon la revendication 1 ou la revendication 2,
**caractérisé en ce que**
la fixation de la console de support (300) ou de la pièce d'écartement (400) sur le point d'attache (10) est effectuée au moyen de deux vis (121, 122).

4. Procédé selon l'une des revendications précédentes, **caractérisé en ce que**
la console de montage (300) comporte une première section de fixation (320), qui est disposée et vissée entre la traverse d'essieu (100) et la carrosserie de véhicule (200), ainsi qu'une seconde section de fixation (340), qui est vissée en supplément à la carrosserie de véhicule (200).
